# EUROPEAN PATENT APPLICATION

(11) **EP 4 040 370 A1**
(43) Date of publication of application: **10.08.2022**
(21) Application number: 19947527.8
(22) Date of filing: 01.10.2019
(51) Int. Cl.: G06Q 50/08

(54) **WORK MANAGEMENT DEVICE, WORK MANAGEMENT METHOD, AND RECORDING MEDIUM**

(71) Applicant: JGC Corporation, Nishi-ku Yokohama-shi Kanagawa 220-6001 (JP)
(72) Inventor: YU, Ming, Yokohama-shi, Kanagawa 220-6001 (JP); KOJIMA, Kazuyuki, Yokohama-shi, Kanagawa 220-6001 (JP); OHARA, Hiroki, Yokohama-shi, Kanagawa 220-6001 (JP)
(74) Representative: Becker, Eberhard
(86) International application number: PCT/JP2019/038812
(87) International publication number: WO 2021/064878

(57) **Abstract**

This work management device is provided with a receiving unit that receives user operations, a generation unit that generates an image indicating a work state by combining one or more image layers selected from a plurality of image layers by the user operations, a display control unit that causes a display device to display the image, and an editing unit that edits the one or more image layers in accordance with the user operations, and the plurality of image layers comprise a first image layer that includes a drawing of an object to be processed and a second image layer for recording work.

## Description

### Technical Field

This disclosure relates to a work management apparatus, a work management method, and a recording medium.

### Background Art

A test for confirming a construction state is sometimes performed in a construction project. For example, as described in Patent Literature 1, a piping pressure test of applying a prescribed pressure to the inside of a piping to confirm soundness of the piping based on whether or not fluid has leaked from the piping is sometimes performed. Hitherto, information on, for example, a work relating to the test has been managed by directly writing the information on a drawing.

### Citation List

### Patent Literature

[PTL 1] JP 2014-119254 A

### Summary of Invention

### Technical Problem

However, the drawing of a construction object and the information on, for example, the work relating to the test may be changed. For example, when a drawing is changed, the information relating to the test is required to be written again on a new drawing. In this technical field, it is desired to efficiently manage a work.

This disclosure describes a work management apparatus, a work management method, and a recording medium, which are capable of increasing efficiency of management of a work.

### Solution to Problem

A work management apparatus according to one aspect of this disclosure is an apparatus configured to manage a work relating to a test for checking a construction state of a construction object. The work management apparatus includes: a reception unit configured to receive an operation of a user; a generation unit configured to generate an image showing a state of the work by making a composite of one or more layers selected from a plurality of layers by an operation of the user; a display control unit configured to display the image on a display apparatus; and an editing unit configured to edit the one or more layers in accordance with an operation of the user. The plurality of layers include a first layer including a drawing of the construction object and a second layer in which a work is to be registered.

A work management method according to one aspect of this disclosure is a method of managing a work relating to a test for checking a construction state of a construction object. The work management method includes: receiving an operation of a user; generating an image showing a state of the work by making a composite of one or more layers selected from a plurality of layers by an operation of the user; displaying the image on a display apparatus; and editing the one or more layers in accordance with an operation of the user. The plurality of layers include a first layer including a drawing of the construction object and a second layer in which a work is to be registered.

A recording medium according to still another aspect of this disclosure is a computer-readable recording medium having recorded thereon a work management program for causing a computer to operate to manage a work relating to a test for checking a construction state of a construction object. The work management program is a program for causing a computer to execute procedures of: receiving an operation of a user; generating an image showing a state of the work by making a composite of one or more layers selected from a plurality of layers by an operation of the user; displaying the image on a display apparatus; and editing the one or more layers in accordance with an operation of the user. The plurality of layers include a first layer including a drawing of the construction object and a second layer in which a work is to be registered.

In the work management apparatus, the work management method, and the recording medium, the image showing the state of the work is generated and displayed through the composition of the one or more layers selected from the plurality of layers by the operation of the user. Then, the one or more layers are edited in accordance with the operation of the user. The work is registered in the second layer independent of the first layer including the drawing of the construction object, and hence, when the drawing is changed, time and effort for registering again the work can be omitted. As a result, efficiency of management of the work can be increased.

The editing unit may be configured to determine whether to edit each of the one or more layers in accordance with the operation of the user based on an editing permission set for each of the one or more layers. In this case, only a user holding the editing permission can edit each of the layers. As a result, it is possible to prevent the layer from being edited by a user without the editing permission, and a possibility of erroneous editing can be reduced.

The plurality of layers may further include a third layer including test information on a portion to be tested of the construction object. In this case, even when the drawing is changed or details of the work are changed, the third layer is not influenced, and hence the test information is not required to be registered again. As a result, the efficiency of management of the work can further be increased.

The second layer may be provided for each group. In this case, a work is registered for each group, and hence a user of each group can confirm a work registered by another user of an own group, and can confirm a work registered by another user of another group. As a result, the work can be managed more efficiently.

### Advantageous Effects of Invention

According to the respective aspects and embodiments of this disclosure, the efficiency of management of the work can be increased.

### Brief Description of Drawings

FIG. 1 is a configuration diagram for schematically illustrating a work management system including a work management apparatus according to an embodiment of this disclosure.
FIG. 2 is a hardware configuration diagram for illustrating the work management apparatus illustrated in FIG. 1.
FIG. 3 is a function block diagram for illustrating the work management system illustrated in FIG. 1.
FIG. 4 is a table for showing a configuration example of a test package information DB illustrated in FIG. 3.
FIG. 5 is a table for showing a configuration example of a drawing information DB illustrated in FIG. 3.
FIG. 6 is a diagram for illustrating layers.
FIG. 7 is a table for showing a configuration example of a remaining work information DB illustrated in FIG. 3.
FIG. 8 is a table for showing a configuration example of a setting information DB illustrated in FIG. 3.
FIG. 9 is a flowchart for illustrating a series of procedures of a work management method to be executed by the work management apparatus illustrated in FIG. 1.
FIG. 10 is a diagram for illustrating an exemplary screen for selecting a test package.
FIG. 11 is a diagram for illustrating an exemplary screen for selecting a drawing.
FIG. 12 is a diagram for illustrating an exemplary screen for performing an operation relating to a remaining work.
FIG. 13 is a diagram for illustrating an exemplary screen for registering a remaining work.
FIG. 14 is a diagram for illustrating an exemplary screen for setting detailed information on the remaining work.
FIG. 15 is a diagram for illustrating an exemplary screen for showing a state of the remaining work.
FIG. 16 is a diagram for illustrating an exemplary screen for changing the state of the remaining work.
FIG. 17 is a diagram for illustrating an exemplary screen for showing a state of the remaining work.
FIG. 18 is a diagram for illustrating an exemplary screen for approving test packages.
FIG. 19 is a diagram for illustrating an exemplary screen for confirming states of test packages.
FIG. 20 is a diagram for illustrating a configuration of a work management program recorded in a recording medium.

### Description of Embodiments

A detailed description is now given of an embodiment of this disclosure with reference to the accompanying drawings. In the description of the drawings, the same components are denoted by the same reference numerals, and a redundant description thereof is omitted.

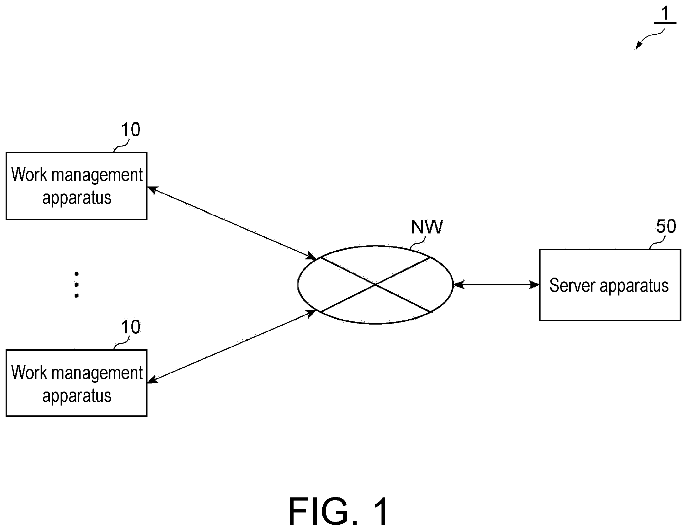

FIG. 1 is a configuration diagram for schematically illustrating a work management system including a work management apparatus according to an embodiment of this disclosure. A work management system 1 illustrated in FIG. 1 is a system configured to manage a work relating to a test (inspection) for confirming a construction state of a construction object. Examples of the construction object include a plant in a field of oil/gas and a plant in a field of infrastructure. Examples of the plant in the oil/gas field include a petroleum refinery plant, a gas treatment plant, a natural gas liquefying plant, a petrochemical plant, and a chemical product manufacturing plant. Examples of the plant in the infrastructure field include a thermal power generation plant, an atomic power generation plant, and a renewable energy power generation plant. Examples of the test for confirming the construction state of a piping include a pressure test. The minimum unit of the test is herein referred to as "test package" . Information required for the test such as a drawing, a remaining work list, an inspection report, and a sign history is assigned to the test package.

Works relating to the test include a work required to be finished before the test, and a work required to be performed after the test. Those works are registered by a line check. The line check is a confirmation work to be performed before the test such as confirming whether or not construction has been performed in accordance with a drawing, whether or not a required nondestructive inspection has been finished, and confirming whether or not a book required for a test is attached. Remaining works (pre-test remaining works) required to be finished before the test and remaining works (post-test remaining works) required to be performed after the test are extracted by the line check, and those remaining works are registered. For example, a pressure test cannot be performed before welding is finished, and the welding work is classified as the pre-test remaining work. A partition plate used for the pressure test cannot be removed before the pressure test, and hence a work of removing the partition plate to return to a state specified by a drawing is classified as the post-test remaining work. The remaining work is also referred to as "punch".

When workers on site perform a remaining work, and a site supervisor signs this remaining work, the remaining work is completed (Punch Completed). Subsequently, a person who has registered the remaining work finally confirms that the remaining work has been completed (Punch Confirmed), to thereby close the remaining work (Closed). A plurality of departments sequentially perform this series of procedures. When all the pre-test remaining works are closed, the test is then performed. Similarly in the case of the post-test remaining work, after the workers on site perform a remaining work, the site supervisor signs this remaining work, to thereby complete the remaining work (Punch Completed). Subsequently, a person who has registered the remaining work finally confirms that the remaining work has been completed (Punch Confirmed), to thereby close the remaining work (Closed). A plurality of departments sequentially perform this series of procedures. The above-mentioned respective steps are also referred to as "milestones".

The work management system 1 includes a plurality of work management apparatus 10 and a server apparatus 50. The plurality of work management apparatus 10 and the server apparatus 50 are communicably connected to each other through a network NW. The network NW may be any one of a wired network and a wireless network. Examples of the network NW include the Internet, a mobile communication network, and a wide area network (WAN). The work management apparatus 10 may be used in an offline environment. In this case, the work management apparatus 10 downloads required information from the server apparatus 50 in advance.

Each of the plurality of work management apparatus 10 is an apparatus configured to manage a work relating to a test for confirming the construction state of the construction object. The work management apparatus 10 is used by a user such as a supervisor, a person in change in each department, and a person in charge of a client. Examples of the work management apparatus 10 include a desktop personal computer (PC), a notebook PC, a tablet terminal, and a smartphone. When the work management apparatus 10 is used on a work site, a portable terminal apparatus such as a tablet terminal, a smartphone, and a notebook PC is used as the work management apparatus 10.

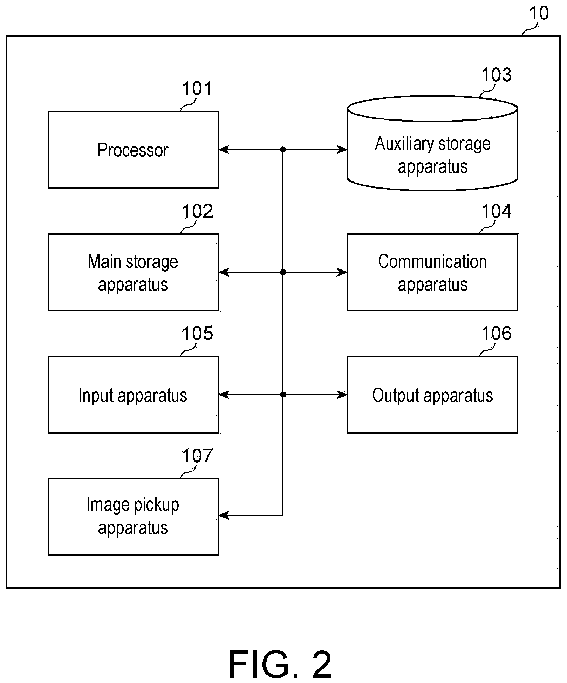

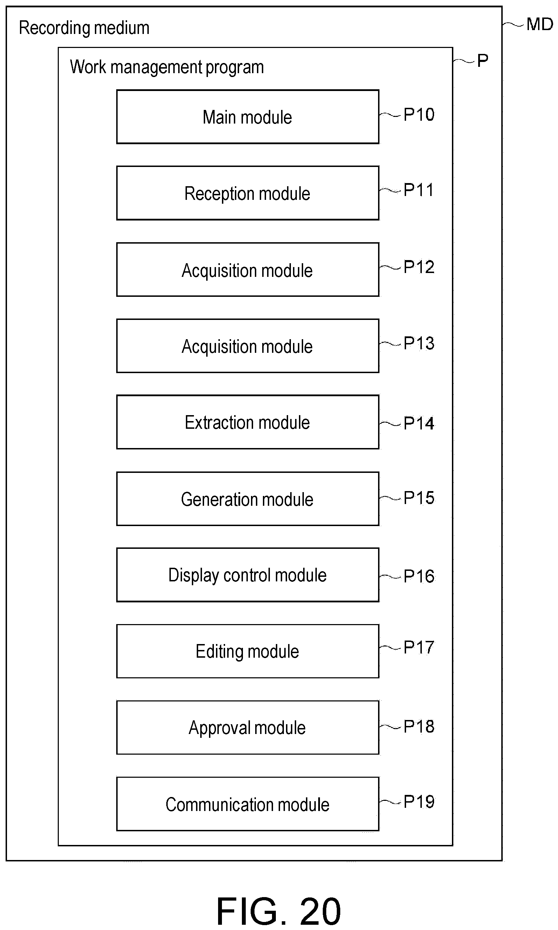

FIG. 2 is a hardware configuration diagram for illustrating the work management apparatus illustrated in FIG. 1. As illustrated in FIG. 2, the work management apparatus 10 may be physically constructed as a computer including hardware components such as one or a plurality of processors 101, a main storage apparatus 102, an auxiliary storage apparatus 103, a communication apparatus 104, an input apparatus 105, an output apparatus 106, and an image pickup apparatus 107. Examples of the processor 101 include a central processing unit (CPU). The main storage apparatus 102 is constructed by a random access memory (RAM), a read only memory (ROM), and the like. Examples of the auxiliary storage apparatus 103 include a semiconductor memory and a hard disk drive. The auxiliary storage apparatus 103 is configured to store a work management program P (see FIG. 20).

The communication apparatus 104 is an apparatus configured to transmit and receive data to and from other apparatus through the network NW. The communication apparatus 104 is constructed by, for example, a network interface card (NIC) or a wireless communication module. Encryption may be used for the transmission/reception of data through the network NW. The input apparatus 105 is an apparatus to be used when the user operates the work management apparatus 10. The input apparatus 105 is constructed by, for example, a touch panel, a keyboard, and a mouse. The output apparatus 106 is an apparatus configured to output various types of information. The output apparatus 106 is constructed by, for example, a display and a speaker.

The image pickup apparatus 107 is an apparatus configured to pick up an image (perform imaging). The image pickup apparatus 107 is, for example, a camera module. Specifically, the image pickup apparatus 107 includes a plurality of components of an optical system, a plurality of circuits of a control system, and a circuit unit of a signal processing system. The components of the optical system include a lens, an image pickup element, and the like. The circuits of the control system are configured to control drive of the components of the optical system. The circuit unit of the signal processing system is configured to convert an electrical signal indicating a taken image generated by the image pickup element to an image signal, which is a digital signal.

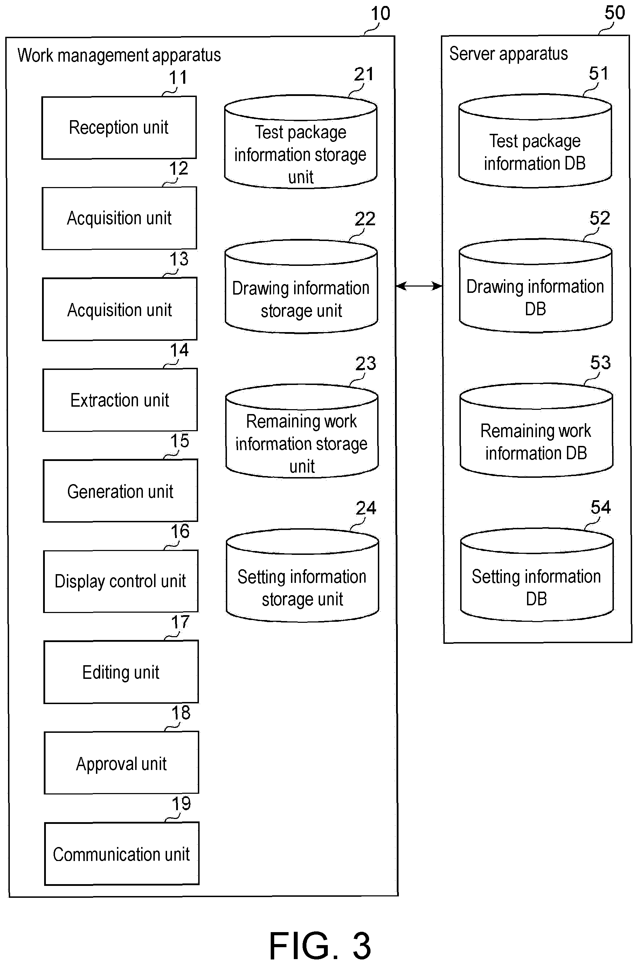

The processor 101 reads the work management program P stored in the auxiliary storage apparatus 103 onto the main storage apparatus 102, and executes the work management program P so that the respective pieces of hardware operate under the control of the processor 101, and data is read from and written to the main storage apparatus 102 and the auxiliary storage apparatus 103. As a result, respective function units of the work management apparatus 10 illustrated in FIG. 3 are implemented.

The server apparatus 50 is an apparatus configured to function as a database configured to store various types of information. The server apparatus 50 has the same hardware configuration as that of the work management apparatus 10. The server apparatus 50 is not required to include the input apparatus 105 and the output apparatus 106. As illustrated in FIG. 3, the server apparatus 50 includes a test package information DB 51, a drawing information DB 52, a remaining work information DB 53, and a setting information DB 54.

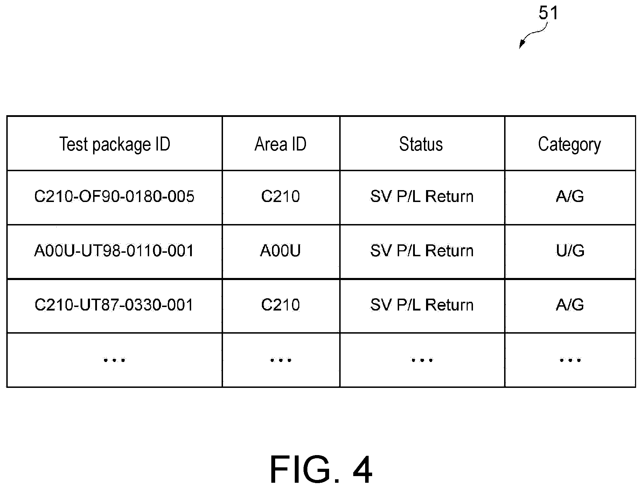

The test package information DB 51 stores test package information relating to test packages. The test package information is information required for tests, and is set for each test package. As shown in FIG. 4, the test package information includes a test package ID (identifier), an area ID, status information, and category information. The test package ID is information capable of uniquely identifying a test package. The area ID is information capable of uniquely identifying an area in which a test object of the test package identified by the test package ID is positioned. The status information is information indicating a step in which processing of the test package identified by the test package ID is being performed. For example, "SV P/L Return" indicates a step in which the site supervisor submits a remaining work list. The category information is information indicating a category of the test object. For example, "A/G" indicates an aboveground piping, and "U/G" indicates an underground piping.

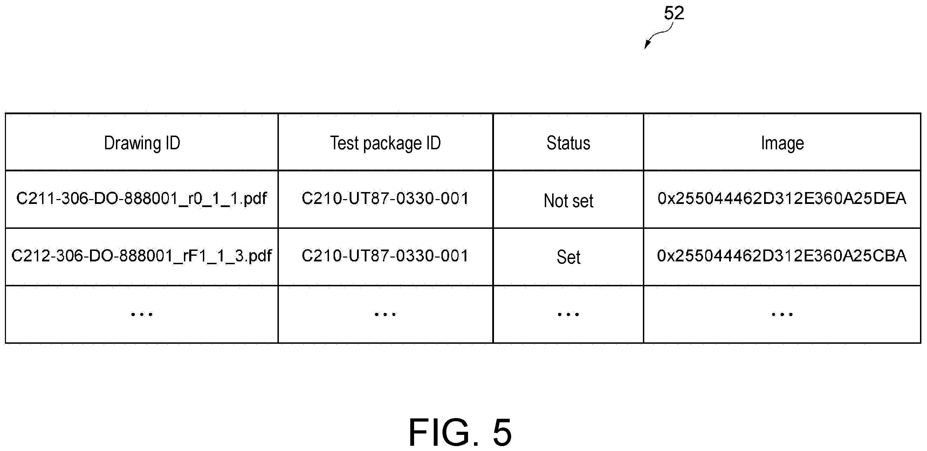

The drawing information DB 52 stores drawing information on drawings. The drawing information is set for each drawing. As shown in FIG. 5, the drawing information includes a drawing ID, a test package ID, status information, and image information. The drawing ID is information capable of uniquely identifying a drawing. The test package ID is information capable of uniquely identifying a test package to which the drawing identified by the drawing ID belongs. One or more drawings are associated with one test package. The status information is information indicating whether or not remaining works are registered in the drawing identified by the drawing ID. The image information contains a plurality of layers.

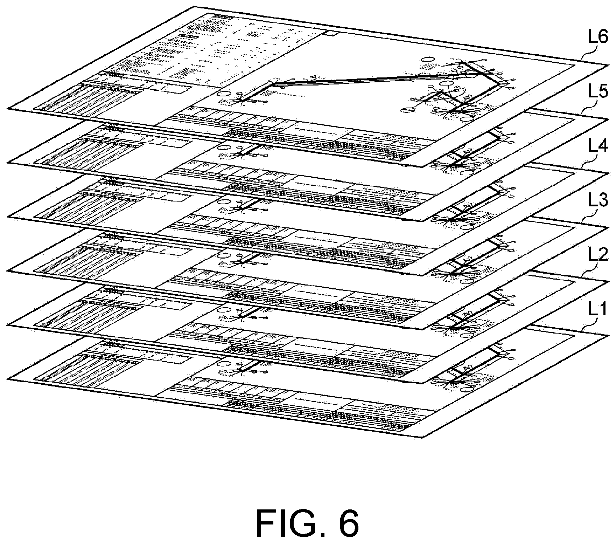

As illustrated in FIG. 6, the image information contains layers L1 to L6 in this embodiment. The layer L1 (first layer) contains drawing data on the construction object (test object). The layer L2 (third layer) contains test information required for the line check and the test. For example, an example of the test information includes information on respective points such as a start point and an end point of the pressure test, an installed location of a pressure gauge, a location at which the atmosphere is released, a pressurized location, a filling location before the pressure test, a discharge location after the pressure test, a point highest in pressure in the pressure test, a point lowest in pressure in the pressure test, a point at which a partition plate is provided, a point at which a valve is closed, and a point at which a valve is opened. Those pieces of information are information for adding symbols indicating the above-mentioned respective points to the respective points of a piping in the drawing data of the layer L1. A portion between the start point and the end point of the pressure test is indicated in an identifiable form (for example, color) as an extent of the pressure test.

The respective layers L3 to L6 (second layer) are assigned to departments (groups) that perform the line check. The layer L3 is assigned to, for example, a construction department. The layer L3 contains symbols indicating remaining works registered by the construction department. The layer L4 is assigned to, for example, a design department. The layer L4 contains symbols indicating remaining works registered by the design department. The layer L5 is assigned to, for example, a quality control department. The layer L5 contains symbols indicating remaining works registered by the quality control department. The layer L6 is assigned to, for example, a client. The layer L6 contains symbols indicating remaining works registered by the client. As the symbol indicating the remaining work, for example, a text of a remaining work ID is used. The symbol indicating the remaining work is displayed in a form (for example, color) that can identity the state of the remaining work.

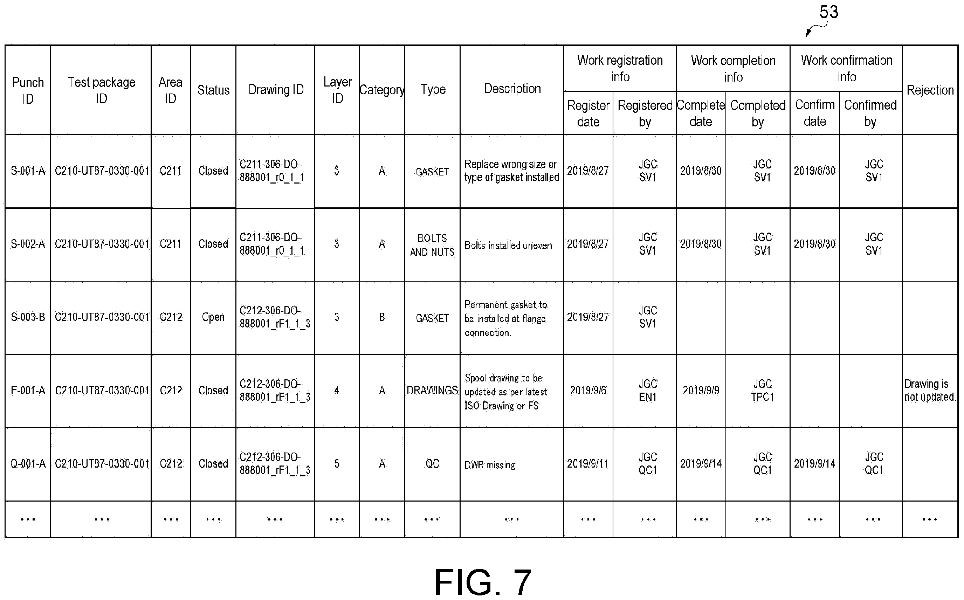

The remaining work information DB 53 stores remaining work information on remaining works. The remaining work information is set for each remaining work. As shown in FIG. 7, the remaining work information contains a remaining work ID, a test package ID, an area ID, status information, a drawing ID, a layer ID, category information, type information, description information, work registration information, work completion information, work confirmation information, and rejection information. The remaining work information may further contain test package coordinator (TPC) confirmation information described later.

The remaining work ID is information capable of uniquely identifying a remaining work. The test package ID is information capable of uniquely identifying a test package in which the remaining work identified by the remaining work ID is to be performed. The area ID is information capable of uniquely identifying an area including a position at which the remaining work identified by the remaining work ID is to be performed. The status information is information indicating a state of the remaining work identified by the remaining work ID. For example, when the remaining work is registered, the state thereof is set to "Open". When the remaining work is finally confirmed, the state thereof is set to "Closed". The drawing ID is information capable of uniquely identifying a drawing in which the remaining work identified by the remaining work ID is registered. The layer ID is information capable of uniquely identifying a layer of the drawing in which the remaining work identified by the remaining work ID is registered.

The category information is information indicating a category of the remaining work identified by the remaining work ID. The category of the remaining work includes the pre-test remaining work and the post-test remaining work. For example, "A" represents the pre-test remaining work, and "B" represents the post-test remaining work. The type information is information indicating a field to which the remaining work identified by the remaining work ID relates. Examples of the field include a gasket and a support. The description information is a text indicating a detailed description of the remaining work identified by the remaining work ID. The work registration information is information indicating a user who has registered the remaining work identified by the remaining work ID and a registration date at a time when the remaining work has been registered. The work completion information is information indicating a user who has completed the remaining work identified by the remaining work ID and a completion date at a time when the remaining work has been completed. The work confirmation information is information indicating a user who has finally confirmed the remaining work identified by the remaining work ID and a confirmation date at a time when the remaining work has been finally confirmed. The rejection information is information indicating a reason for performing again the remaining work identified by the remaining work ID after the remaining work has been completed.

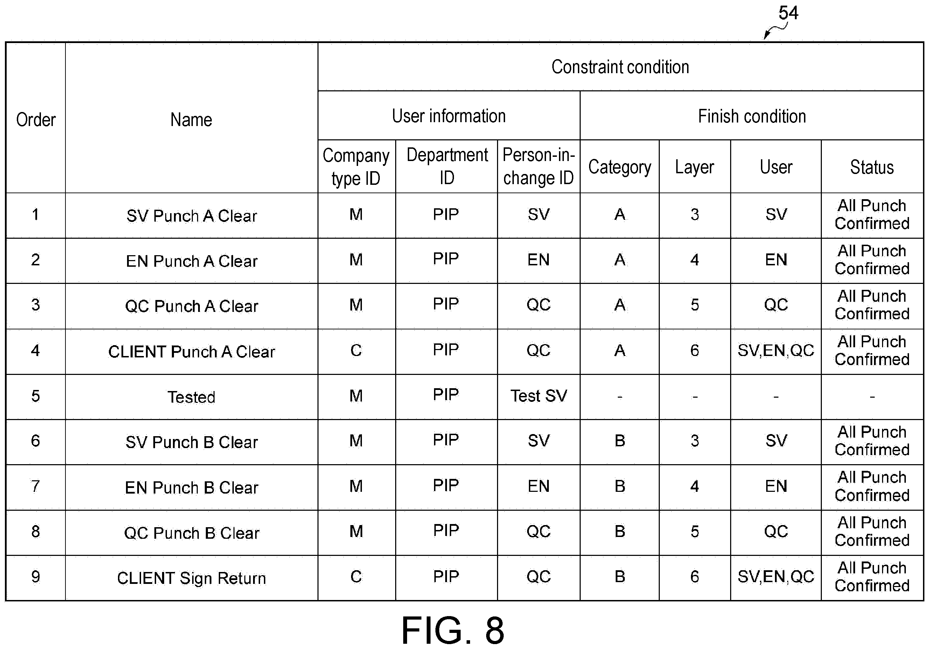

The setting information DB 54 stores setting information indicating a finish condition for approving each step. The setting information is set for each test package. As shown in FIG. 8, the setting information contains an order, a name, and constraint condition information. The order indicates an order of performing the steps in the test package. The name indicates a name of the step. "SV Punch A Clear" indicates a step in which a site supervisor completes a pre-test remaining work. "EN Punch A Clear" indicates a step in which a person in charge of design completes a pre-test remaining work. "QC Punch A Clear" indicates a step in which a person in charge of quality control completes a pre-test remaining work. "CLIENT Punch A Clear" indicates a step in which a person in charge of quality control of a client completes a pre-test remaining work. "Tested" indicates a step in which a test is to be completed. "SV Punch B Clear" indicates a step in which the site supervisor completes a post-test remaining work. "EN Punch B Clear" indicates a step in which the person in charge of design completes a post-test remaining work. "QC Punch B Clear" indicates a step in which the person in charge of quality control completes a post-test remaining work. "CLIENT Sign Return" indicates a step in which the client finally approves the test.

The constraint condition information contains user information and finish condition information. The user information is information indicating a user having an authority to approve the step. The user information contains a company type ID, a department ID, and a person-in-charge ID. The company type ID is information capable of uniquely identifying a type of a company. For example, "S" indicates a subcontractor, "M" indicates a main contractor, and "C" indicates a client. The department ID is information capable of uniquely identifying a department. The person-in-charge ID is information capable of uniquely identifying a type of a person in charge. Examples of the type of the person in charge include the site supervisor, the person in charge of design, and the person in charge of quality control. For example, "SV" indicates the site supervisor, "EN" indicates the person in charge of design, "QC" indicates the person in charge of quality control, and "Test SV" indicates a site supervisor in charge of the test.

The finish condition information is information indicating a condition for approving (finishing) the step. The finish condition information includes category information, layer information, user information, and status information. Those pieces of information indicate that the step can be approved when a remaining work in a category indicated by the category information contained in a layer indicated by the layer information is processed by a user indicated by the user information and a state indicated by the status information is reached. "All Punch Confirmed" indicates a state in which all the remaining works are finally confirmed.

As illustrated in FIG. 3, the work management apparatus 10 functionally includes a reception unit 11, an acquisition unit 12, an acquisition unit 13, an extraction unit 14, a generation unit 15, a display control unit 16, an editing unit 17, an approval unit 18, a communication unit 19, a test package information storage unit 21, a drawing information storage unit 22, a remaining work information storage unit 23, and a setting information storage unit 24.

The reception unit 11 is a function unit configured to receive an operation of the user of the work management apparatus 10. The reception unit 11 is configured to output operation information indicating details of the operation of the user to the acquisition unit 12, the acquisition unit 13, the extraction unit 14, the display control unit 16, the editing unit 17, the approval unit 18, and the communication unit 19.

The acquisition unit 12 is a function unit configured to acquire a plurality of pieces of test package information. The acquisition unit 12 acquires, for example, test package information on test packages required to be processed by the user of the work management apparatus 10 from the test package information storage unit 21. The acquisition unit 12 outputs the test package information to the display control unit 16 and the approval unit 18.

The acquisition unit 13 is a function unit configured to acquire the drawing information and the remaining work information based on an operation of the user. For example, the acquisition unit 13 acquires, from the drawing information storage unit 22, drawing information associated with a test package selected by the user. For example, the acquisition unit 13 acquires, from the remaining work information storage unit 23, remaining work information associated with a test package selected by the user. The acquisition unit 13 outputs the drawing information and the remaining work information to the extraction unit 14, the display control unit 16, and the editing unit 17.

The extraction unit 14 is a function unit configured to extract one or more layers from the drawing information based on an operation of the user. For example, the extraction unit 14 extracts, from the drawing information, one or more layers selected by the user. The extraction unit 14 outputs the one or more layers to the generation unit 15.

The generation unit 15 is configured to generate a display image showing a state of the work by making a composite of one or more layers selected from a plurality of layers based on an operation of the user. When only one layer is selected by the user, the generation unit 15 sets this layer as the display image. When two or more layers are selected by the user, the generation unit 15 superimposes the two or more layers on one another, to thereby generate the display image. The generation unit 15 outputs the display image to the display control unit 16.

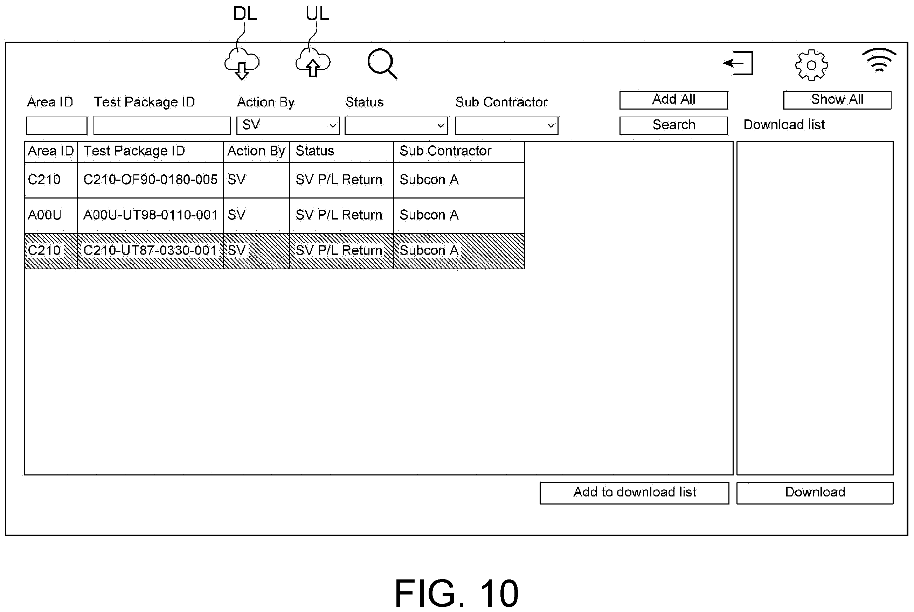

The display control unit 16 is a function unit configured to display various images on a display apparatus (display) of the output apparatus 106. The display control unit 16 outputs display information for displaying predetermined information to the display apparatus, and the display apparatus displays the predetermined information based on the display information. When the display control unit 16 receives the display image from the generation unit 15, the display control unit 16 displays the display image on the display apparatus. The display control unit 16 displays images (FIG. 10 to FIG. 19) described later on the display apparatus.

The editing unit 17 is a function unit configured to edit one or more layers in accordance with an operation of the user. In response to an editing operation performed by the user, the editing unit 17 determines, for example, whether or not to perform the editing in accordance with the editing operation of the user based on editing permission set to each of the one or more layers. The editing permission has been set in advance by an administrator of the work management system 1, and permission information indicating the editing permission has been stored in the server apparatus 50. The editing permission may be specified in accordance with a combination of a company, a department, and a person in charge. For example, editing permission for the layer L5 is assigned to a supervisor in a quality control department of a company A, and only a user holding the editing permission can edit the layer L5.

The editing unit 17 reflects details of the editing in the layer, and outputs the drawing information including the edited layer to the drawing information storage unit 22 so as to be stored. When a remaining work is registered through editing, the editing unit 17 creates remaining work information on this remaining work, and outputs the remaining work information to the remaining work information storage unit 23 so as to be stored. When the state of the remaining work is changed through the editing, the editing unit 17 changes the status information of the remaining work information on this remaining work, and outputs the changed remaining work information to the remaining work information storage unit 23 so as to be stored.

The approval unit 18 is a function unit configured to approve a test package. In response to an operation of approving a test package by the user, the approval unit 18 determines whether or not a finish condition indicated in the setting information in the setting information storage unit 24 is satisfied. When the approval unit 18 determines that the finish condition is satisfied, the approval unit 18 updates the status information of the test package information to "Closed". As a result, the test package is approved, and the test package is passed to a next step.

The communication unit 19 is a function unit configured to communicate to/from an external apparatus. In response to a download operation performed by the user, the communication unit 19 acquires test package information, drawing information, and remaining work information from the server apparatus 50, and stores the test package information, the drawing information, and the remaining work information in the test package information storage unit 21, the drawing information storage unit 22, and the remaining work information storage unit 23, respectively. In this state, the communication unit 19 may acquire setting information from the server apparatus 50, and may store the setting information in the setting information storage unit 24. In response to an upload operation performed by the user, the communication unit 19 transmits the test package information stored in the test package information storage unit 21, the drawing information stored in the drawing information storage unit 22, and the remaining work information stored in the remaining work information storage unit 23 to the server apparatus 50.

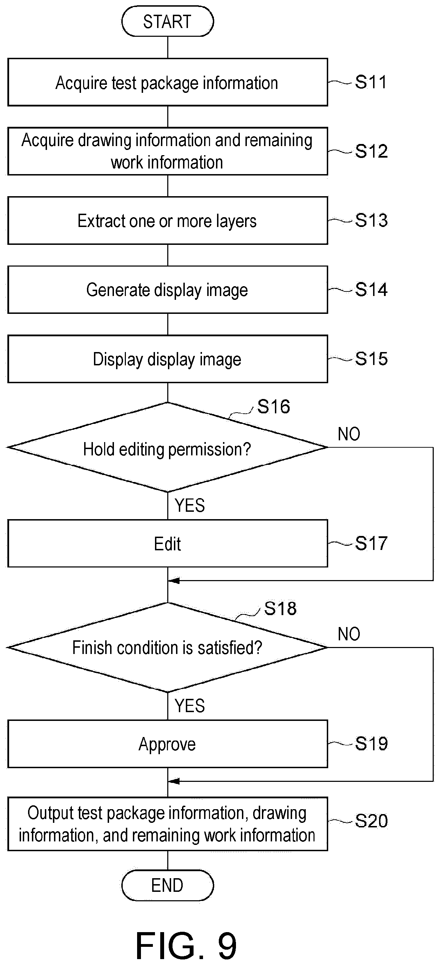

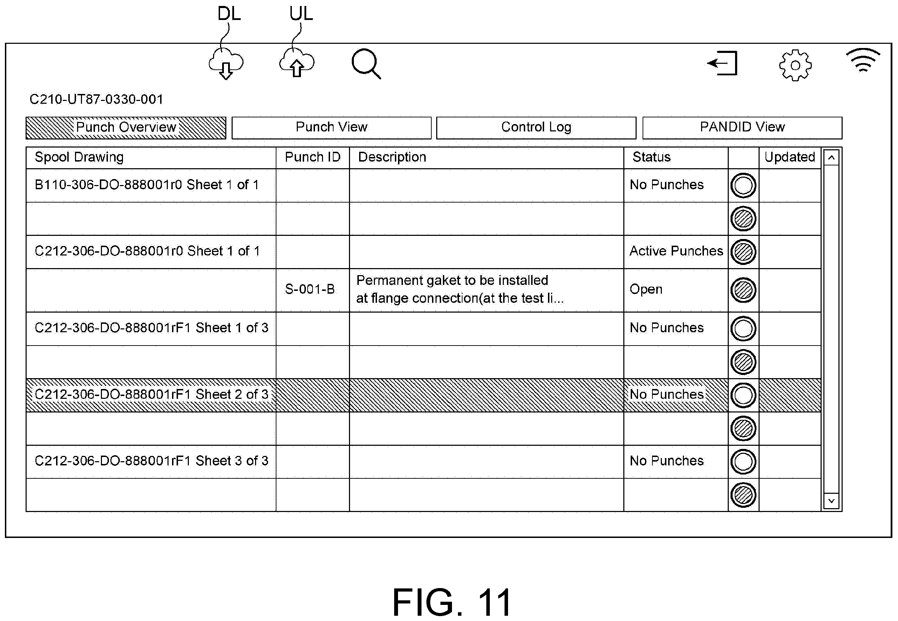

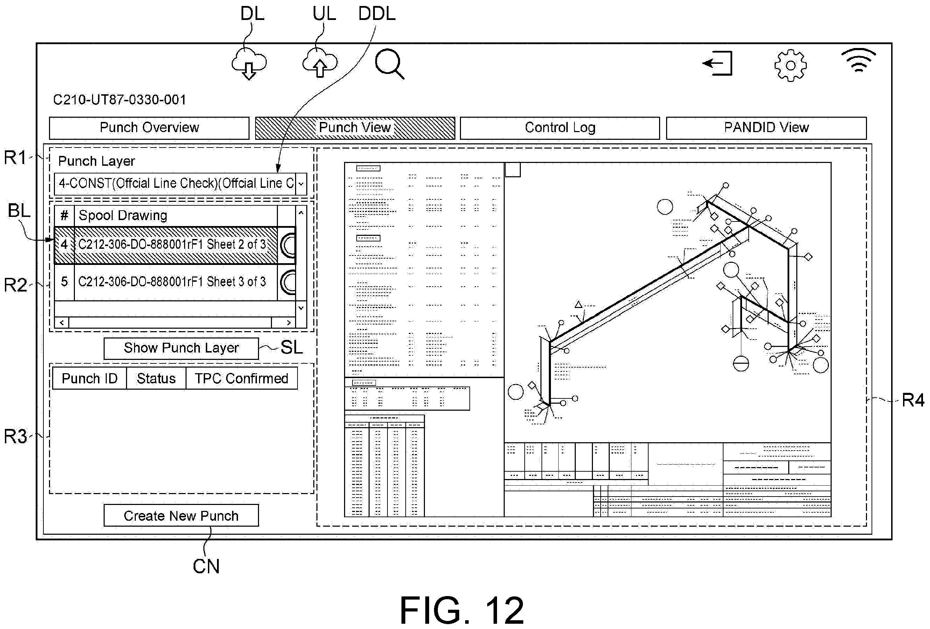

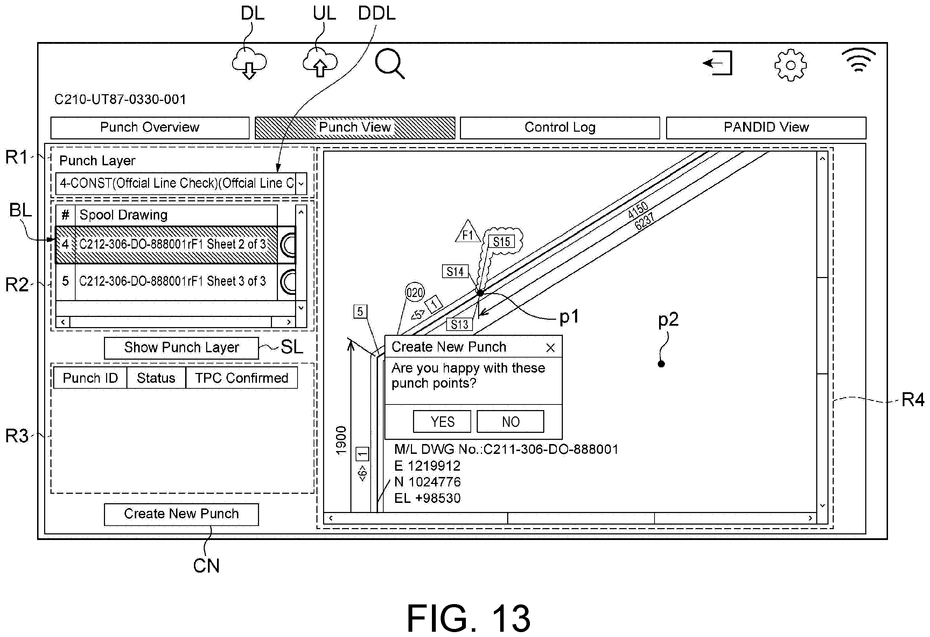

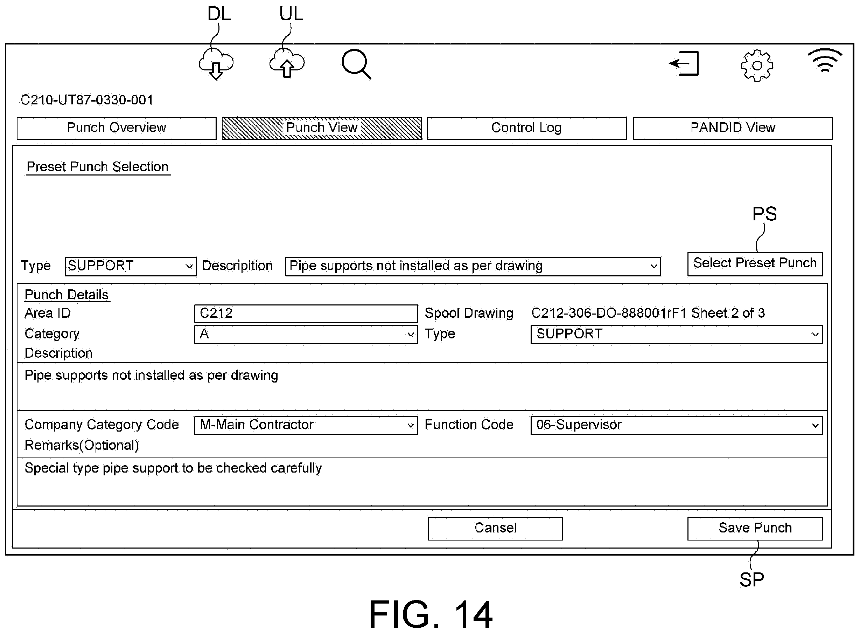

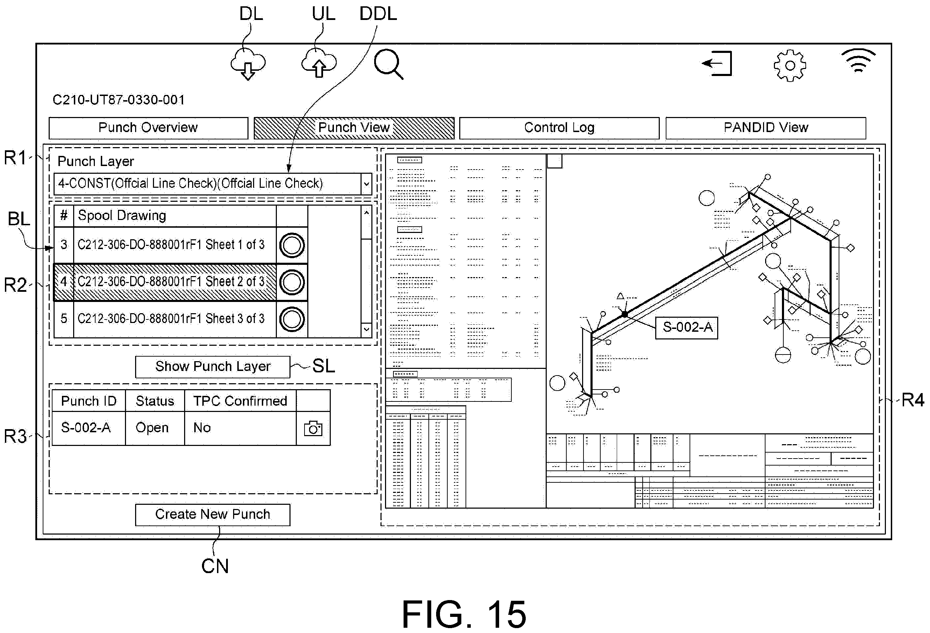

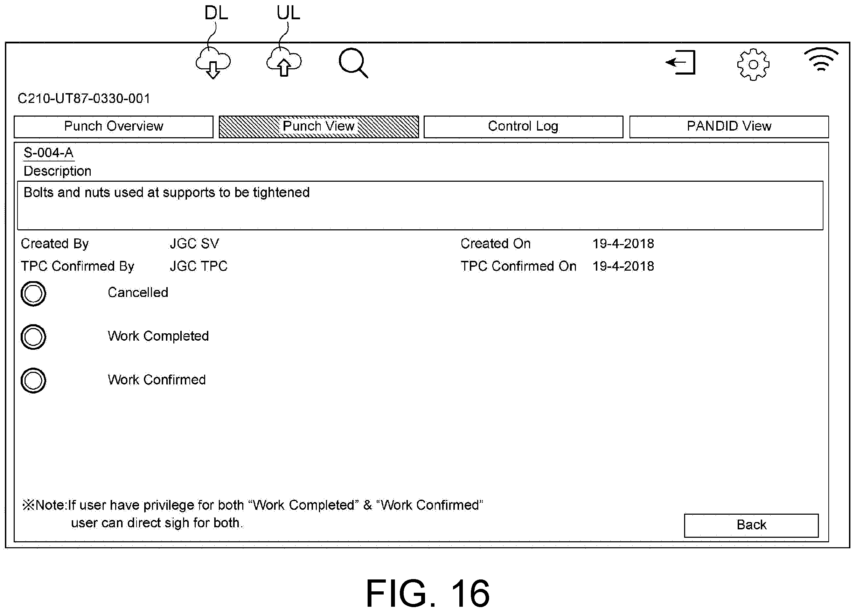

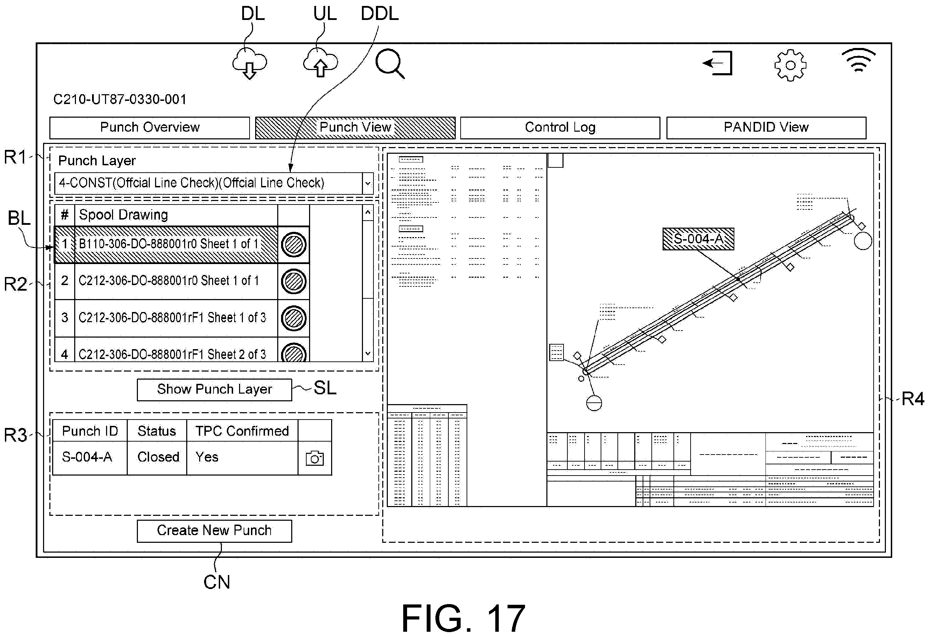

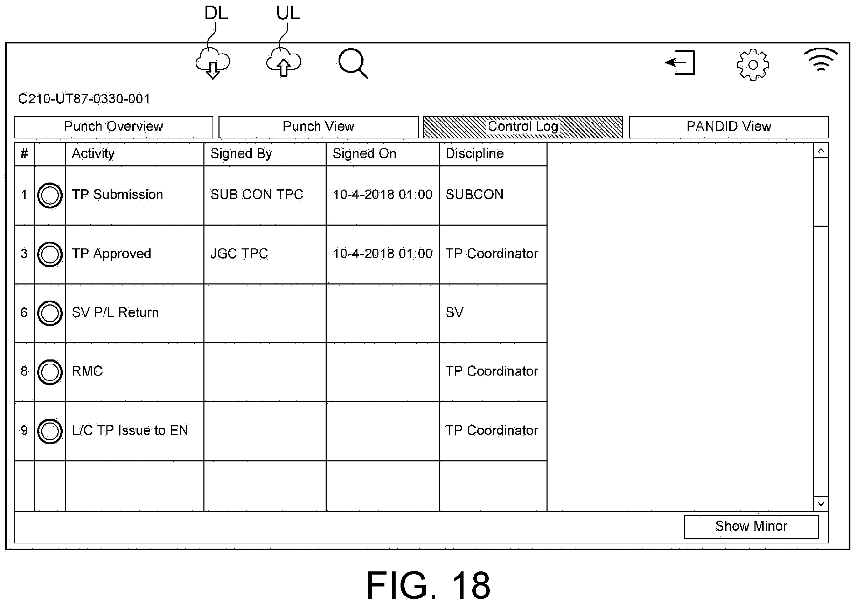

Referring to FIG. 9 to FIG. 18, a description is now given of a work management method to be executed by the work management apparatus 10. FIG. 9 is a flowchart for illustrating a series of procedures of the work management method to be executed by the work management apparatus illustrated in FIG. 1. FIG. 10 is a diagram for illustrating an exemplary screen for selecting a test package. FIG. 11 is a diagram for illustrating an exemplary screen for selecting a drawing. FIG. 12 is a diagram for illustrating an exemplary screen for performing an operation relating to a remaining work. FIG. 13 is a diagram for illustrating an exemplary screen for registering a remaining work. FIG. 14 is a diagram for illustrating an exemplary screen for setting detailed information on the remaining work. FIG. 15 is a diagram for illustrating an exemplary screen for showing a state of the remaining work. FIG. 16 is a diagram for illustrating an exemplary screen for changing the state of the remaining work. FIG. 17 is a diagram for illustrating an exemplary screen for showing the state of the remaining work. FIG. 18 is a diagram for illustrating an exemplary screen for approving test packages. The flowchart of FIG. 9 is started by the work management apparatus 10 activating an application for performing an operation relating to a test package so as to perform a display operation for the test package.

First, the acquisition unit 12 acquires test package information from the test package information storage unit 21 (Step S11). For example, the acquisition unit 12 acquires test package information on test packages required to be processed by the user of the work management apparatus 10 from the test package information storage unit 21. Then, the acquisition unit 12 outputs the test package information to the display control unit 16 and the approval unit 18. As illustrated in FIG. 10, when the display control unit 16 receives the test package information from the acquisition unit 12, the display control unit 16 displays a list of the test packages on the display apparatus. Then, the user selects a desired test package from the list of the test packages. In the example illustrated in FIG. 10, a test package identified by a test package ID of "C210-UT87-0330-001" is selected.

Subsequently, the acquisition unit 13 acquires drawing information on the test package selected by the user from the drawing information storage unit 22, and acquires remaining work information on the test package selected by the user from the remaining work information storage unit 23 (Step S12). For example, the acquisition unit 13 acquires, from the drawing information storage unit 22, drawing information on one or more drawings indicated by drawing IDs associated with the test package ID of the test package selected by the user. Similarly, the acquisition unit 13 acquires, from the remaining work information storage unit 23, remaining work information associated with the test package ID of the test package selected by the user. Then, the acquisition unit 13 outputs the drawing information and the remaining work information to the extraction unit 14 and the display control unit 16.

As illustrated in FIG. 11, when the display control unit 16 receives the drawing information and the remaining work information from the acquisition unit 13, the display control unit 16 displays a list of the drawings on the display apparatus. In this display screen example, drawing IDs of and status information on all the drawings contained in the test package selected by the user are displayed. Punch IDs, description information, and status information of the remaining work set to the drawing are associated with each of the drawing IDs, and are displayed. The status "Active Punches" represents a state in which remaining works are registered in the drawing, and the status "No Punches" represents a state in which remaining works are not registered. Then, the user selects a desired drawing from the list of the drawings. In the example illustrated in FIG. 11, a second sheet of a drawing identified by a drawing ID of "C212-306-DO-888001rF1" is selected.

As illustrated in FIG. 12, the display control unit 16 displays a screen relating to the drawing selected by the user on the display apparatus. This screen contains a region R1, a region R2, a region R3, and a region R4. The region R1 is used to select a layer. The region R2 is used to display a list of drawings. The region R3 is used to display a list of remaining works. The region R4 is used to display a display image. In the example illustrated in FIG. 12, a dropdown list DDL is arranged in the region R1. A box list BL is displayed in the region R2. In the box list BL, the drawing ID of the drawing selected on the screen of FIG. 11 is selected. In this screen, the user selects a layer from the dropdown list DDL, and presses a button SL for displaying a display image. In this example, a layer 1 to a layer 6 are displayed as options on the dropdown list DDL.

A combination of the option of the dropdown list DDL and the layer is set in advance. That is, when the layer 1 is selected in the dropdown list DDL, the layer L1 is selected. When the layer 2 is selected in the dropdown list DDL, the layer L1 and the layer L2 are selected. When any one of the layer 3 to the layer 6 is selected in the dropdown list DDL, the layer L1 and the layer L2 are selected in addition to the selected layer. There may be displayed options that enable the user to directly select a desired layer from the layer L1 to the layer L6.

Subsequently, the extraction unit 14 extracts, from the drawing information, the one or more layers selected by the user (Step S13). Specifically, the extraction unit 14 extracts, from the one or more pieces of drawing information received from the acquisition unit 13, drawing information on the drawing selected by the user on the screen of FIG. 11, and extracts, from the drawing information, the one or more layers selected by the user on the screen of FIG. 12. Further, the extraction unit 14 extracts remaining work information registered in the one or more layers selected by the user. Specifically, the extraction unit 14 extracts, from the remaining work information received from the acquisition unit 13, remaining work information having the drawing ID of the drawing selected by the user on the screen of FIG. 11 and the layer IDs of the layers selected by the user on the screen of FIG. 12. Then, the extraction unit 14 outputs the one or more layers to the generation unit 15, and outputs the remaining work information to the display control unit 16.

On the screen of FIG. 11, the drawing in which a remaining work is not registered is selected, and hence remaining work information is not registered in the layer selected by the user. Therefore, the extraction unit 14 cannot extract remaining work information, and does not thus output remaining work information to the display control unit 16.

Subsequently, when the generation unit 15 receives the one or more layers from the extraction unit 14, the generation unit 15 generates a display image by making a composite of the one or more layers (Step S14). Then, the generation unit 15 outputs the display image to the display control unit 16.

Subsequently, when the display control unit 16 receives the display image from the generation unit 15, the display control unit 16 controls the display apparatus so as to display the display image in the region R4 of the screen illustrated in FIG. 12 (Step S15) . Moreover, when the display control unit 16 receives remaining work information from the extraction unit 14, the display control unit 16 controls the display apparatus so as to display a list of remaining works in the region R3. A remaining work ID (Punch ID), status information, and TPC confirmation information (TPCConfirmed) are associated with each of the remaining works, and are displayed. In the example illustrated in FIG. 12, the display control unit 16 does not receive remaining work information from the extraction unit 14, and hence a list of remaining works is not displayed in the region R3.

The TPC confirmation information is information indicating whether or not the test package coordinator has confirmed registered remaining work. The test package coordinator confirms whether or not the description, the category, and the editing permission of the remaining works are correctly set. "Yes" is set to the TPC confirmation information on a confirmed remaining work. "No" is set to the TPC confirmation information on a remaining work that is not confirmed yet. The TPC confirmation information is contained in the remaining work information. Through setting of the TPC confirmation information to "Yes", the remaining work information is brought into a state in which the remaining work information can be uploaded to the server apparatus 50.

Subsequently, in response to the editing operation performed by the user, the editing unit 17 determines whether or not the user holds editing permission (Step S16). When the editing unit 17 refers to the permission information acquired from the server apparatus 50, and determines that the user does not hold the editing permission (NO in Step S16), the editing unit 17 does not accept the editing operation (editing request). Meanwhile, when the editing unit 17 determines that the user holds the editing permission (YES in Step S16), the editing unit 17 performs editing in accordance with the editing operation (Step S17).

For example, a description is given of a case in which the user of the work management apparatus 10 performs a line check to register a remaining work. On the screen illustrated in FIG. 12, when the user has pressed a button CN for newly creating a remaining work, the editing unit 17 determines whether or not the user holds editing permission for editing the layer L4 (Step S16). When the editing unit 17 determines that the user does not hold the editing permission (NO in Step S16), the editing unit 17 does not accept the request for newly creating a remaining work. Meanwhile, when the editing unit 17 determines that the user holds the editing permission (YES in Step S16), the editing unit 17 brings the layer L4 into an editable state.

Then, as illustrated in FIG. 13, the user selects, on the display image, a position p1 at which the remaining work is performed, and further selects a position p2 to which a symbol is added. Subsequently, as illustrated in FIG. 14, a screen for setting detailed information on the remaining work is displayed, and the user inputs the type of the remaining work, a description of the remaining work, an area in which the remaining work is to be performed, the category of the remaining work, the user information on a user who has registered the remaining work, and the like. Some of those pieces of information may automatically be set by pressing a preset button PS.

Then, the user presses a save button SP after the detailed information on the remaining work is set. As a result, the editing unit 17 adds the symbol indicating the newly registered remaining work to the layer L4 (Step S17), and creates remaining work information indicating the newly registered remaining work. Then, the editing unit 17 outputs, to the drawing information storage unit 22, drawing information including the layer L4 to which the symbol is added so as to be stored, and outputs the remaining work information indicating the registered remaining work to the remaining work information storage unit 23 so as to be stored. Then, as illustrated in FIG. 15, the registered remaining work is displayed in the region R3, and the symbol of the registered remaining work is displayed on the display image in the region R4.

A description is now given of a case in which the user of the work management apparatus 10 completes or finally confirms a remaining work. On the screen illustrated in FIG. 15, the user selects a remaining work whose state the user wants to change from the list of the remaining works displayed in the region R3. For example, the user presses status information of the remaining work. In response to this, the editing unit 17 determines whether or not the user holds the editing permission for editing the layer L4 (Step S16). When the editing unit 17 determines that the user does not hold the editing permission (NO in Step S16), the editing unit 17 does not accept the request for changing the state of the remaining work. Meanwhile, when the editing unit 17 determines that the user holds the editing permission (YES in Step S16), the editing unit 17 outputs a command to the display control unit 16, and causes the display control unit 16 to display a screen for changing the state of the remaining work as illustrated in FIG. 16.

Then, on a screen illustrated in FIG. 16, when the user has selected any one of a completed state (Work Completed) and a confirmed state (Work Confirmed) of the remaining work, the editing unit 17 changes a symbol of the remaining work to a symbol indicating the selected state (Step S17), and changes the status information of the remaining work information on the remaining work to information indicating the selected state. Then, the editing unit 17 outputs, to the drawing information storage unit 22, the drawing information including the layer L4 in which the symbol has been changed so as to be stored, and outputs, to the remaining work information storage unit 23, the remaining work information whose status information has been changed so as to be stored. Then, as illustrated in FIG. 17, the status information on the remaining work is changed in the region R3, and the symbol of the remaining work is changed on the display image in the region R4. In the example of FIG. 17, the symbol of the confirmed remaining work is grayed.

Subsequently, in response to the operation of the user for approving the test package, the approval unit 18 determines whether or not a finish condition is satisfied (Step S18). For example, when, on the screen illustrated in FIG. 18, the user selects "SV P/L Return" so as to perform an operation (approval operation) for finishing "SV P/L Return", the approval unit 18 reads setting information from the setting information storage unit 24, to thereby determine whether or not the finish condition for the current step is satisfied. When the approval unit 18 determines that the finish condition is not satisfied (NO in Step S18), the approval unit 18 does not accept the approval operation. Meanwhile, when the approval unit 18 determines that the finish condition is satisfied (YES in Step S18), the approval unit 18 accepts the approval operation, and updates the status information of the test package information stored in the test package information storage unit 21. For example, the status information of the test package information is updated to information indicating a next step.

Subsequently, in response to an upload operation performed by the user, the communication unit 19 reads the test package information, the drawing information, and the remaining work information from the test package information storage unit 21, the drawing information storage unit 22, and the remaining work information storage unit 23, respectively, and transmits (outputs) the test package information, the drawing information, and the remaining work information to the server apparatus 50 (Step S20) . For example, when an upload button UL illustrated in FIG. 18 is pressed, the communication unit 19 transmits the test package information, the drawing information, and the remaining work information to the server apparatus 50.

As a result, the series of procedures of the work management method is finished.

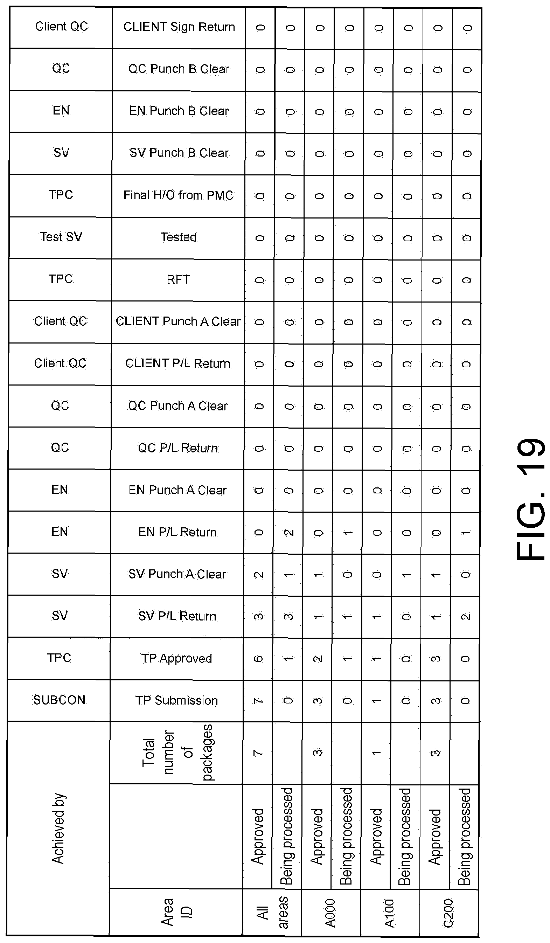

The display control unit 16 may display a screen showing in which step each of the test packages is on the display apparatus based on a plurality pieces of test package information. As illustrated in FIG. 19, the display control unit 16 may display, in each area on the display apparatus, the total number of test packages, the number of approved test packages in each step, and the number of test packages being processed in each step. "TP Submission" indicates a step in which a test package is to be submitted. "TP Approved" indicates a step in which a test package is to be approved. "EN P/L Return" indicates a step in which the person in charge of design submits a remaining work list. "QC P/L Return" indicates a step in which the person in charge of quality control submits a remaining work list. "CLIENT P/L Return" indicates a step in which the person in charge of quality control of the client submits a remaining work list. "RFT" indicates a step in which preparation for a test is to be completed. "Final H/O from PMC" indicates a step in which a test package is returned from a person in charge of a test operation. "APPROVED BY: " represents a person who approves each step, and is indicated by an ID of a person in charge. "SUBCON" represents the subcontractor. "TPC" represents the test package coordinator. In response to pressing of the number of test packages by the user on this screen, the display control unit 16 may display a screen showing details of those test packages on the display apparatus.

Next, referring to FIG. 20, a description is given of the work management program P for causing a computer to function as the work management apparatus 10 and a recording medium MD for recording the work management program P. FIG. 20 is a diagram for illustrating a configuration of the work management program recorded in the recording medium.

As illustrated in FIG. 20, the work management program P includes a main module P10, a reception module P11, an acquisition module P12, an acquisition module P13, an extraction module P14, a generation module P15, a display control module P16, an editing module P17, an approval module P18, and a communication module P19. The main module P10 is a part configured to integrally control processing relating to the work management. Functions implemented by executing the reception module P11, the acquisition module P12, the acquisition module P13, the extraction module P14, the generation module P15, the display control module P16, the editing module P17, the approval module P18, and the communication module P19 are the same as the functions of the reception unit 11, the acquisition unit 12, the acquisition unit 13, the extraction unit 14, the generation unit 15, the display control unit 16, the editing unit 17, the approval unit 18, and the communication unit 19, respectively.

The work management program P is supplied in the computer-readable recording medium MD such as a compact disc-read only memory (CD-ROM), a digital versatile disc-read only memory (DVD-ROM), and a semiconductor memory. The work management program P may be supplied as a data signal through the network NW.

In the above-mentioned work management apparatus 10, work management method, and recording medium MD having recorded thereon the work management program P, the display image showing the state of the work is generated and displayed through the composition of the one or more layers selected from the plurality of layers by the operation of the user. Then, the one or more layers are edited in accordance with the operation of the user. The works are registered in the layers L3 to L6 independent of the layer L1 including the drawing of the construction obj ect, and when the drawing is changed, time and effort for registering again the works can thus be omitted. As a result, efficiency of management of the work can be increased.

The editing unit 17 determines whether or not to perform the editing in accordance with the operation of the user based on the editing permission set for each of the one or more layers. With this configuration, only a user holding the editing permission can edit each of the layers. As a result, it is possible to prevent the layer from being edited by a user without the editing permission, and a possibility of erroneous editing can be reduced.

Even when the drawing is changed or the details of the work are changed, the layer L2 is not influenced, and the test information is not required to be registered again. As a result, the efficiency of management of the work can further be increased.

Each of the layers L3 to L6 is provided for each department. Therefore, a work is registered in each layer for each department, and hence each user can confirm a work registered by another user of the own department, and can confirm a work registered by another user of another department. As a result, the work can more efficiently be managed.

The work management apparatus, the work management method, and the recording medium according to this disclosure are not limited to those of the above-mentioned embodiment.

For example, the work management apparatus 10 and the server apparatus 50 may be constructed by one apparatus joined physically or logically, or may be constructed by a plurality of apparatus physically or logically separated from one another. For example, each of the work management apparatus 10 and the server apparatus 50 may be implemented by a plurality of computers distributed on a network as in the cloud computing.

For example, when the work management apparatus 10 is used in an environment in which the work management apparatus 10 can communicate to/from the server apparatus 50, the work management apparatus 10 may not include at least any one of the test package information storage unit 21, the drawing information storage unit 22, the remaining work information storage unit 23, and the setting information storage unit 24. In this case, the acquisition unit 12 may directly acquire the test package information from the server apparatus 50 (test package information DB 51). Similarly, the acquisition unit 13 may directly acquire the drawing information and the remaining work information from the server apparatus 50 (the drawing information DB 52 and the remaining work information DB 53). Similarly, the approval unit 18 may directly acquire the setting information from the server apparatus 50 (setting information DB 54).

The configurations of the test package information DB 51, the drawing information DB 52, the remaining work information DB 53, and the setting information DB 54 are not limited to the configurations of the embodiment. The configurations of the respective databases may be changed by a publicly-known method. For example, the test package information DB 51, the drawing information DB 52, the remaining work information DB 53, and the setting information DB 54 may be managed as independent tables in one database.

The work management apparatus 10 may not include the acquisition unit 12. In this case, the user may select a test package on an apparatus different from the work management apparatus 10. The work management apparatus 10 may not include the acquisition unit 13 and the extraction unit 14. In this case, the generation unit 15 may directly acquire desired drawing information (layers) and remaining work information from the drawing information storage unit 22 and the remaining work information storage unit 23, respectively.

The work management apparatus 10 may not include the approval unit 18. In this case, the user may approve a test package on an apparatus different from the work management apparatus 10. The respective types of information may not be downloaded from the server apparatus 50, and may not be uploaded to the server apparatus 50. In this case, the work management apparatus 10 may not include the communication unit 19.

The work management apparatus 10 may not include the display apparatus. In this case, the display control unit 16 transmits the display information to an external display apparatus, to thereby display predetermined information on the display apparatus.

### Reference Signs List

1 ··· work management system, 10 ··· work management apparatus, 11 ··· reception unit, 15 ··· generation unit, 16 ··· display control unit, 17 ··· editing unit, 106 ··· output apparatus (display apparatus), MD ··· recording medium, P ··· work management program

## Claims

1. A work management apparatus, which is configured to manage a work relating to a test for checking a construction state of a construction object, the work management apparatus comprising:
a reception unit configured to receive an operation of a user;
a generation unit configured to generate an image showing a state of the work by making a composite of one or more layers selected from a plurality of layers by an operation of the user;
a display control unit configured to display the image on a display apparatus; and
an editing unit configured to edit the one or more layers in accordance with an operation of the user,
wherein the plurality of layers include a first layer including a drawing of the construction object and a second layer in which a work is to be registered.

2. The work management apparatus according to claim 1, wherein the editing unit is configured to determine whether to edit each of the one or more layers in accordance with the operation of the user, based on an editing permission set to the each of the one or more layers.

3. The work management apparatus according to claim 1 or 2, wherein the plurality of layers further include a third layer including test information relating to a portion to be tested of the construction object.

4. The work management apparatus according to any one of claims 1 to 3, wherein the second layer is provided for each group.

5. A work management method for managing a work relating to a test for checking a construction state of a construction object, the work management method comprising:
receiving an operation of a user;
generating an image showing a state of the work by making a composite of one or more layers selected from a plurality of layers by an operation of the user;
displaying the image on a display apparatus; and
editing the one or more layers in accordance with an operation of the user,
wherein the plurality of layers include a first layer including a drawing of the construction object and a second layer in which a work is to be registered.

6. A computer-readable recording medium having recorded thereon a work management program for causing a computer to operate to manage a work relating to a test for checking a construction state of a construction object, the work management program being a program for causing a computer to execute procedures of:
receiving an operation of a user;
generating an image showing a state of the work by making a composite of one or more layers selected from a plurality of layers by an operation of the user;
displaying the image on a display apparatus; and
editing the one or more layers in accordance with an operation of the user,
the plurality of layers including a first layer including a drawing of the construction object and a second layer in which a work is to be registered.
